# EUROPEAN PATENT APPLICATION

(11) **EP 4 632 003 A1**
(43) Date of publication of application: **15.10.2025**
(21) Application number: 23855869.6
(22) Date of filing: 16.01.2023
(51) Int. Cl.: C08L 39/06, C08L 33/26, C08F 226/10, C08F 220/56, C08F 220/44, C08K 3/013, H01M 50/42, H01M 50/446

(54) **COPOLYMER COMPOSITION FOR SEPARATOR AND SECONDARY BATTERY COMPRISING SAME**

(30) Priority: 05.12.2022 KR 20220167645
(71) Applicant: Hansol Chemical Co., Ltd, Seoul 06169 (KR)
(72) Inventor: LEE, Go-Eun, Wanju-gun, Jeollabuk-do 55321 (KR); CHO, Seung-Wan, Wanju-gun, Jeollabuk-do 55321 (KR); JANG, Bo-Ok, Wanju-gun, Jeollabuk-do 55321 (KR); LEE, Nam-Joo, Wanju-gun, Jeollabuk-do 55321 (KR); KIM, Young-Su, Wanju-gun, Jeollabuk-do 55321 (KR); KIM, Jin-Yeong, Wanju-gun, Jeollabuk-do 55321 (KR); OH, Sae-Wook, Wanju-gun, Jeollabuk-do 55321 (KR); KWON, Se-Man, Wanju-gun, Jeollabuk-do 55321 (KR); NOH, Myeong-Jun, Wanju-gun, Jeollabuk-do 55321 (KR)
(74) Representative: Ipsilon
(86) International application number: PCT/KR2023/000725
(87) International publication number: WO 2024/122739

(57) **Abstract**

Proposed is a copolymer composition including a copolymer and a cross-linking agent, in which the copolymer includes 30% or more to 80% or less by weight of at least one type of monomer units selected from the group consisting of acrylate-based monomer units, acrylonitrile-based monomer units, vinylamide-based monomer units, and acrylamide-based monomer units and 20% or more to 70% or less by weight of vinylpyrrolidone monomer units, based on 100% by weight of the copolymer. In addition, a slurry composition, a separator, and a secondary battery that contains the polymer composition are proposed.

## Description

### Technical Field

The present disclosure relates to a copolymer composition, a slurry composition containing the same, a separator, and a secondary battery.

### Background Art

Lithium secondary batteries have a high energy density, thereby the batteries are widely used in the electrical, electronics, communications, and computer industries. Following small-sized lithium secondary batteries for portable electronic devices, lithium secondary batteries are expanding their application areas to high-capacity secondary batteries for hybrid and electric vehicles.

Lithium-ion secondary batteries are insulated by a separator, but internal or external battery abnormalities or shocks can cause a short circuit between the negative electrodes and positive electrodes of the batteries, leading to heat generation and explosion. Therefore, ensuring the thermal/chemical safety of the separator is significantly important.

Currently, polyolefin-based films are widely used as separators, but polyolefin has the disadvantage of severe heat shrinkage at high temperatures and weak mechanical properties.

To improve the stability of such polyolefin-based separators, porous separators coated with a mixture of inorganic particles and binders on polyolefin porous base films have been developed.

That is, to avoid the battery instability caused by dendrites and heat shrinkage resulting from the high temperature of the polyolefin-based separator, by coating one side or both sides of the porous base of the separators with inorganic particles and binders, the inorganic particles can provide the function of avoiding a shrinkage rate of the base, and at the same time, a safer separator can be manufactured through a coating layer.

To ensure excellent battery characteristics, the coating layer is required to be uniformly coated and at the same time, strong adhesion to the base is required.

Additionally, to respond to recent high capacity and output, there is a need to further improve the heat resistance of conventional separators.

### [Related Art Documents]

### [Patent Document]

(Patent document 1) Korean Patent No. 10-1430975
(Patent document 2) Korean Patent Application Publication No. 10-2006-0072065

### Disclosure

### Technical Problem

Accordingly, the present disclosure is to provide a slurry composition with excellent heat resistance and adhesiveness using a copolymer composition.

In addition, the present disclosure is to provide a separator with excellent heat resistance through the application of the slurry composition thereto and to provide a battery with excellent performance by using the separator. In particular, the separator may have excellent heat resistance when the separator is wetted with an electrolyte solution.

The separator enables the implementation of a battery with excellent lifespan characteristics and stability.

However, the problem to be solved by the present disclosure is not limited to the problems mentioned above, and other problems not mentioned will be clearly understood by those skilled in the art from the description below.

### Technical Solution

One aspect of the present disclosure provides a copolymer composition
which includes a copolymer including 30% or more to 80% or less by weight of at least one type of monomer unit selected from the group consisting of acrylate-based monomer units, acrylonitrile-based monomer units, vinylamide-based monomer units, and acrylamide-based monomer units and 20% or more to 70% or less by weight of vinylpyrrolidone monomer units, based on 100% weight of the copolymer; and
a cross-linking agent.

Another aspect of the present disclosure provides a slurry composition
including the copolymer composition; and
inorganic particles.

Yet another aspect of the present disclosure provides a separator
containing the slurry composition.

Yet another aspect of the present disclosure provides a secondary battery including
the separator.

### Advantageous Effects

The copolymer composition of the present disclosure can improve the adhesion and heat resistance of the slurry composition, increase adhesion with a polyolefin film, which is a base of a separator, and improve the heat resistance of the separator (particularly, heat resistance in a state of being wetted with an electrolyte).

With the use of the separator, a battery with excellent lifespan characteristics and stability can be implemented.

### Best Mode

Hereinafter, the operation and effects of the present disclosure will be described in more detail through specific embodiments of the present disclosure. However, these embodiments are merely presented as examples of the present disclosure, and the scope of the present disclosure is not determined by the embodiments.

Prior to this, terms and words used in this specification and claims should not be construed as limited to their usual or dictionary meanings. Based on the principle that the inventor(s) can appropriately define the concept of the term to explain his or her disclosure in the best way, it must be interpreted as meaning and concept consistent with the technical idea of the present disclosure.

The configuration of the embodiments described in this specification is only one of the most preferred embodiments of the present disclosure and does not represent the entire technical idea of the present disclosure. Therefore, it should be understood that at the time of filing this application, there may be various equivalents and modifications that can replace the embodiments.

In this specification, singular expressions include plural expressions, unless the context clearly dictates otherwise. In this specification, terms such as "include", "comprise", or "have" are intended to indicate the presence of implemented features, numbers, steps, components, or a combination thereof. It should be understood that this does not exclude in advance the presence or addition of one or more other features, numbers, steps, components, or a combination thereof.

In this specification, "a to b" and "a - b" that indicate numerical ranges, "to" and "-" are defined as ≥ a and ≤ b.

One aspect of the present disclosure provides a copolymer composition

which includes a copolymer including 30% or more to 80% or less by weight of at least one type of monomer unit selected from the group consisting of acrylate-based monomer units, acrylonitrile-based monomer units, vinylamide-based monomer units, and acrylamide-based monomer units and 20% or more to 70% or less by weight monomer units, based on 100% weight of the copolymer; and a cross-linking agent.

For example, the at least one type of monomer unit selected from the group consisting of the content of the acrylate-based monomer units, acrylonitrile-based monomer units, vinylamide-based monomer units, and acrylamide-based monomer units may be contained in an amount of 50% or more to 80% or less by weight, and the vinylpyrrolidone monomer units may be contained in an amount of 20% or more to 50% or less by weight.

The cross-linking agent introduces a chemical and physical cross-linking structure into the copolymer to improve the heat resistance of the separator when the copolymer composition is applied to the secondary battery separator and also to improve the lifespan characteristics and stability of secondary batteries using the separator.

In particular, since the vinylpyrrolidone monomer units in the copolymer have the property of dissolving in a solution of electrolyte, thereby dissolution of vinylpyrrolidone can be reduced through the chemical and physical cross-linking structure created by the cross-linking agent, which in turn leads to improvement in the heat resistance of the separator when the separator being wetted with the electrolyte solution.

The chemical cross-linking structure using the cross-linking agent is a cross-linking structure formed by covalent bonds. The physical cross-linking structure formed by the cross-linking agent is a cross-linking structure formed by bonds such as hydrogen bonds and ionic bonds rather than covalent bonds.

Meanwhile, when the content of at least one type of monomer unit selected from the group consisting of acrylate-based monomer units, acrylonitrile-based monomer units, vinylamide-based monomer units, and acrylamide-based monomer units exceeds the range of the present disclosure, and when the content of the vinylpyrrolidone monomer units below the range of the present disclosure, the heat resistance of the separator to which the copolymer composition is applied may decrease.

Meanwhile, when the content of at least one type of monomer unit selected from the group consisting of acrylate-based monomer units, acrylonitrile-based monomer units, vinylamide-based monomer units, and acrylamide-based monomer units is below the range of the present disclosure, and when the content of the vinylpyrrolidone monomer units exceeds the range of the present disclosure, the adhesion of the copolymer composition may decrease.

The acrylate-based monomer units may be formed by polymerizing water-soluble acrylate-based monomers.

The vinylamide-based monomer units may be formed by polymerizing water-soluble vinylamide-based monomers.

In one embodiment, the acrylate-based monomer units may be formed by polymerizing acrylic acid, methacrylic acid, hydroxylethyl acrylate, hydroxylethyl methacrylate, glycidyl acrylate, glycidyl methacrylate, or a combination thereof, the acrylonitrile-based monomer units may be formed by polymerizing acrylonitrile, methacrylonitrile, or a combination thereof, the water-soluble vinyl amide-based monomer units may be formed by polymerizing vinyl acetamide, methyl vinyl acetamide, vinylformamide, or a combination thereof, the acrylamide-based monomer units may be formed by polymerizing acrylamide, methacrylamide, N-methylmethacrylamide, hydroxyethyl acrylamide, hydroxyethyl methacrylamide, or dimethylacrylamide, or a combination thereof, and the vinylpyrrolidone monomer units may be formed by polymerizing vinylpyrrolidone.

The copolymer may be formed by copolymerizing at least one monomer selected from acrylate-based monomers, acrylonitrile-based monomers, vinylamide-based monomers, and acrylamide-based monomers, and vinylpyrrolidone monomers.

In another embodiment, the copolymer may include a monomer repeating structure represented by Formula 1.

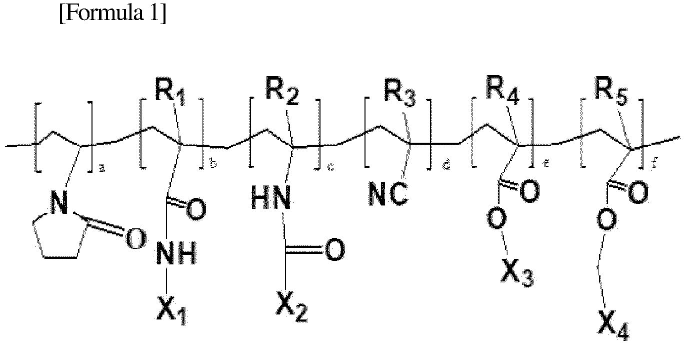

In Formula 1,
R₁ to R₅ may be each independently hydrogen or a linear or branched hydrocarbon having 1 to 4 carbon atoms, X₁ and X₂ may be each independently hydrogen or a linear or branched hydrocarbon having 1 to 20 carbon atoms, X₃ may be hydrogen, a linear or branched hydrocarbon having 1 to 20 carbon atoms, or an acid, X₄ may be a linear or branched hydrocarbon having 1 to 20 carbon atoms, or alcohol, and a, b, c, d, e, and f may be in a relationship of a+b+c+d+e+f=1.

In Formula 1, a, b, c, d, e, and f correspond to the weight fraction of each monomer unit, and the sum of the weight fractions of each monomer unit is 1.

Meanwhile, a may be in a range of 0.2 to 0.7, and b+c+d+e+f may have a value in a range of 0.3 to 0.8.

Additionally, b, c, d, e, and f may each independently be in a range of 0 to 0.8. However, at least one of b, c, d, e, and f may not be 0.

For example, R₁ to R₄ and X₁ to X₄ in Formula 1 may each independently include at least one selected from the group consisting of hydrogen, methyl, and ethyl.

In yet another embodiment, the cross-linking agent may include at least one selected from the group consisting of a first cross-linking agent and a second cross-linking agent, the first cross-linking agent may contain a double bond, and the second cross-linking agent may be a compound represented by Formula 2.

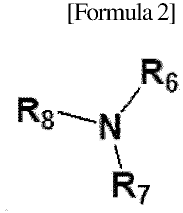

In Formula 2,
R₆ to R₈ may be each independently hydrogen, a linear or branched hydrocarbon having 1 to 6 carbon atoms, an alcohol having 1 to 6 carbon atoms, an acid having 1 to 6 carbon atoms, or a combination thereof.

For example, the alcohol having 1 to 6 carbon atoms may be -(CH₂)₂OH, -(CH₂)₃OH, - (CH₂)₄OH, -(CH₂)₅OH, or -(CH₂)₆OH, and the acid having 1 to 6 carbon atoms may be -(CH₂)₂COOH.

That is, the first cross-linking agent may introduce a chemical cross-linking structure formed by covalent bonds into the copolymer, and the second cross-linking agent may introduce a physical cross-linking structure into the copolymer through bonds rather than covalent bonds.

The first cross-linking agent may contribute to improving the heat resistance of the separator to which the copolymer composition of the present disclosure is applied. The second cross-linking agent may contribute to improving the adhesion of the copolymer composition of the present disclosure and the heat resistance (particularly, heat resistance in a state of being wetted with an electrolyte) of the separator to which the copolymer composition of the present disclosure is applied.

In yet another embodiment, the first cross-linking agent may be an acrylic-based monomer having two or more functional groups or an amide-based monomer having two or more functional groups.

In addition, the first cross-linking agent may contain poly(ethylene glycol)diacrylate, N,N'-methylenebisacrylamide, divinyl adipate, 1,4-butanediol divinyl ether, 1,4-cyclohexanedimethanol divinyl ether, 1,6-divinylperfluorohexane, 1H,1H,6H,6H-perfluoro-1,6-hexanediol diacrylate, or a combination thereof.

In yet another embodiment, the first cross-linking agent may be included in an amount of 0.05 or more to 5 parts by weight, and the second cross-linking agent may be included in an amount of 0.05 or more to 5 parts by weight, based on 100 parts by weight of the copolymer.

When the first cross-linking agent and/or the second cross-linking agent may be included in an amount below the range specified herein, the heat resistance of the separator to which the copolymer composition of the present disclosure is applied may decrease.

In yet another embodiment, the copolymer may be a random or block copolymer depending on a synthesis process.

In yet another embodiment, the copolymer may have a number average molecular weight in a range of 5,000 to 1,000,000.

When the number average molecular weight of the copolymer is less than 5,000, the fluidity of the copolymer may increase, resulting in lowered dispersibility and lowered heat resistance characteristics of the separator. When the number average molecular weight is more than 1,000,000, the viscosity is too high to be used and the pores of the separator may be blocked, reducing air permeability and resistance.

A slurry composition according to another aspect of the present disclosure may include the copolymer composition of the present disclosure and inorganic particles.

The inorganic particles may be used without limitation as long as the inorganic particles are insulating particles, and may preferably be insulating particles with high dielectric constant.

Specific examples of the inorganic particles may be selected from Al₂O₃, AlOOH, SiO₂, TiO₂, ZrO₂, ZnO, NiO, CaO, SnO₂, Y₂O₃, MgO, BaTiO₃, CaTiO₃, SrTiO₃, SiC, Li₃PO₄, Pb(Zr,Ti)O₃(PZT), and (Pb,La)(Zr,Ti)O₃(PLZT), and a mixture thereof.

The size of the inorganic particles is not particularly limited, but for example, the average particle diameter may be in a range of 0.01 µm to 30 µm, more preferably 0.1 µm to 10 µm. When the average particle diameter of the inorganic particles is less than the preferred range, dispersibility may be low, and when the average particle diameter of the inorganic particles exceeds the preferred range, the thickness of the coating layer after coating may increase, and mechanical properties may deteriorate.

Additionally, the shape of the inorganic particles is not particularly limited and may be, for example, spherical, oval, or irregularly shaped.

A separator according to another aspect of the present disclosure may include the slurry composition of the present disclosure.

When the separator is left at 150°C for 1 hour, the heat shrinkage rate in Machine Direction (MD, longitudinal direction) and Transverse Direction (TD, width direction) may be 6% or less.

Additionally, when the separator is wetted with an electrolyte solution for 12 hours and then left at 150°C for 1 hour, the heat shrinkage rate in MD and TD directions may be in a range of 7% or less.

A separator may be manufactured through the application of the slurry composition on at least one side of a porous base film for coating or by preparing the slurry composition in the form of a film and then depositing the filmed slurry composition onto the porous base film.

Meanwhile, the separator may be used as a separator for secondary batteries, for example, as a separator for lithium secondary batteries.

An example of manufacturing the separator includes: (a) preparing a polymer solution by dissolving or dispersing the copolymer composition in a solvent; (b) adding and mixing inorganic particles to the polymer solution obtained in the (a) preparation; and (c) coating and drying at least one region selected from the group consisting of the surface of the polyolefin-based base of the separator and a portion of the pores in the base with the mixture obtained in the (b) addition and mixing.

First, 1) the copolymer composition is prepared and ready in the form of a polymer solution dissolved or dispersed in an appropriate solvent.

The solvent is preferably one that has a solubility index similar to that of the copolymer composition used as a binder and preferably has a low boiling point. This is to facilitate uniform mixing and subsequent solvent removal. Non-limiting examples of usable solvents include acetones, tetrahydrofurans, methylene chlorides, chloroforms, dimethylformamides, N-methyl-2-pyrrolidones (NMPs), cyclohexanes, water, or a mixture thereof. More preferably, it can be used in a water-dispersed state.

2) Inorganic particles are added and dispersed to the prepared polymer solution to prepare inorganic particles and polymer mixtures.

It is desirable to carry out a dispersion process of the polymer solution and the inorganic particles. At this time, the appropriate dispersion time may be in a range of 10 minutes to 5 hours. Conventional methods can be used as the dispersion method, and the ball mill method is particularly preferable.

The composition of the mixture consisting of inorganic particles and polymers is not greatly limited, but the thickness, pore size, and porosity of the finally manufactured organic/inorganic composite porous separator of the present disclosure can be adjusted accordingly.

In other words, as the ratio of inorganic particles (I) to polymer (P) (ratio = I/P) increases, the porosity of the separator increases. This results in an increase in the thickness of the separator at the same solid content (inorganic particle weight + polymer weight). Additionally, the possibility of pore formation between inorganic particles increases, increasing pore size. At this time, as the size (particle diameter) of the inorganic particles increases, the interstitial distance between the inorganic materials increases, so the pore size increases.

3) The separator of the present disclosure can be obtained through the application of the prepared mixture of inorganic particles and polymers onto the prepared polyolefin-based base of the separator for coating and then drying the base.

At this time, the method of coating the polyolefin-based base of the separator with the mixture of inorganic particles and polymers can be a conventional coating method known in the art. For example, various methods such as dip coating, die coating, roll coating, comma coating, or a combination thereof can be used. In addition, when applying a mixture of inorganic particles and polymers onto a polyolefin-based base of the separator for coating, the mixture can be applied to both sides of the base of the separator or can be selectively applied to only one side.

When the separator is used in secondary batteries, lithium ions can be transferred not only through the base of the separator but also through the porous active layer. When an internal short circuit occurs due to an external impact, the safety improvement effect described above can be achieved.

Additionally, the secondary batteries may include a positive electrode, a negative electrode, a separator interposed between the positive electrode and the negative electrode, and a solution of electrolyte.

The secondary batteries can be manufactured according to conventional methods known in the art. For example, the secondary batteries are manufactured by assembling the electrodes and the separator, and then injecting the electrolyte into the assembly.

There is no significant limitation on the electrodes to be applied with the separator, but the cathode active material can be any conventional cathode active material that can be used in the negative electrode of a secondary battery. Non-limiting examples thereof include lithium intercalation, such as complex oxides formed by any one selected from lithiated magnesium oxides, lithiated cobalt oxides, lithiated nickel oxides, or a combination thereof. In addition, the negative active material can be any conventional negative active material that can be used in the positive electrode of a conventional electrochemical device. Non-limiting examples thereof include lithium intercalation, such as lithium metal, or lithium alloy and carbon, petroleum coke, activated carbon, graphite, or other carbons. The positive and negative electrodes are formed by binding the mentioned positive and negative active materials to a positive current collector, which is foil manufactured from aluminum, nickel, or a combination thereof, and a negative current collector, which is foil manufactured from copper, gold, nickel, copper alloy, or a combination thereof, respectively.

The solution of electrolyte is a salt with a structure as A⁺B⁻, where A⁺ contains an alkali metal cation such as Li⁺, Na⁺, and K⁺, or an ion composed of combinations thereof, and B⁻ is an anion such as PF₆⁻, BF4⁻, Cl⁻, Br⁻, I⁻, ClO₄⁻, AsF₆⁻, CH₃CO₂⁻, CF₃SO₃⁻, N(CF₃SO₂)₂⁻, and C(CF₂SO₂)₃⁻. Salts containing ions selected from the group consisting of combinations of the mentioned ions are preferably dissolved and dissociated in an organic solvent consisting of propylene carbonate (PC), ethylene carbonate (EC), diethyl carbonate (DEC), dimethyl carbonate (DMC), and dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (GBL), or a mixture thereof.

As a process for applying the separator to batteries, in addition to the general winding process, lamination and folding processes of the separator and electrodes are possible.

### Mode for Disclosure

Hereinafter, the present disclosure will be described in more detail using examples, but the present disclosure is not limited thereto.

### [Preparation Example 1] Manufacturing of copolymer

650 parts by weight of distilled water, 100 parts by weight of the monomer mixture, and N,N'-methylenebisacrylamide (MBA) were placed as a first cross-linking agent into a reaction vessel, and then high-purity nitrogen gas was injected into the reaction vessel while raising the temperature to 60°C and stirring the mixture. A copolymer was prepared by adding 0.1 to 0.5 parts by weight of potassium persulfate, which was a decomposition initiator, based on 100 parts by weight of the monomer mixture, and the monomer mixture to a reaction vessel prepared at a temperature of 60°C and proceeding with a continuous polymerization reaction.

### [Example 1]

A copolymer was prepared according to Preparation Example 1 by using 70 parts by weight of acrylamide (AM) and 30 parts by weight of N-vinylpyrrolidone (VP) for a monomer mixture and 0.3 parts by weight of N,N'-methylenebisacrylamide which was a first cross-linking agent.

Afterward, a binder copolymer was prepared by post-adding 0.1 parts by weight of diethanolamine (DEA), which was a second cross-linking agent, and proceeding with a post-addition reaction.

### [Example 2]

A binder copolymer was prepared in the same manner as in Example 1, except that 50 parts by weight of acrylamide and 50 parts by weight of vinylpyrrolidone were used for a monomer mixture.

### [Example 3]

A binder copolymer was prepared in the same manner as in Example 1, except that 70 parts by weight of acrylamide, 20 parts by weight of vinylpyrrolidone, and 10 parts by weight of acrylic acid (AA) were used for a monomer mixture.

### [Example 4]

A binder copolymer was prepared in the same manner as in Example 1, except that 70 parts by weight of acrylamide, 20 parts by weight of vinylpyrrolidone, and 10 parts by weight of acrylonitrile (AN) were used for a monomer mixture.

### [Example 5]

A binder copolymer was prepared in the same manner as in Example 1, except that 40 parts by weight of acrylic acid, 20 parts by weight of vinylpyrrolidone, and 40 parts by weight of acrylonitrile were used for a monomer mixture.

### [Example 6]

A binder copolymer was prepared in the same manner as in Example 1, except that 70 parts by weight of acrylic acid and 30 parts by weight of vinylpyrrolidone were used for a monomer mixture.

### [Comparative Example 1]

A polymer was prepared according to Preparation Example 1 and used as a binder copolymer by not using a first cross-linking agent, N,N'-methylenebisacrylamide, but using only 100 parts by weight of acrylamide rather than a monomer mixture.

That is, a non-crosslinked acrylamide polymer homopolymer was used as a binder polymer.

### [Comparative Example 2]

A binder polymer was prepared in the same manner as Comparative Example 1 except that 0.1 part by weight of diethanolamine, which was a second cross-linking agent, was post-added and a post-addition reaction proceeded.

That is, an acrylamide polymer homopolymer crosslinked only with a second cross-linking agent was used as a binder polymer.

### [Comparative Example 3]

A binder polymer was prepared in the same manner as Comparative Example 1 except that 0.3 parts by weight of N,N'-methylenebisacrylamide was used as a first cross-linking agent.

That is, an acrylamide polymer homopolymer crosslinked only with a first cross-linking agent was used as a binder polymer.

### [Comparative Example 4]

A binder polymer was prepared in the same manner as Comparative Example 1 except that 0.3 parts by weight of N,N'-methylenebisacrylamide as a first cross-linking agent was used, followed by post-addition reaction with 0.1 part by weight of diethanolamine as a second cross-linking agent.

That is, an acrylamide polymer homopolymer crosslinked with a first cross-linking agent, and a second cross-linking agent was used as a binder polymer.

### [Comparative Example 5]

A binder polymer was prepared in the same manner as Example 1 except that N,N'-methylenebisacrylamide, which was a first cross-linking agent, was not used, and 0.1 part by weight of diethanolamine, which was a second cross-linking agent, was not subjected to a post-addition reaction.

That is, a non-crosslinked acrylamide-vinylpyrrolidone copolymer was used as a binder copolymer.

### [Comparative Example 6]

A binder polymer was prepared in the same manner as Example 1 except that N,N'-methylenebisacrylamide, which was a first cross-linking agent, was not used.

That is, an acrylamide-vinylpyrrolidone copolymer crosslinked only with a second cross-linking agent was used as a binder copolymer.

### [Comparative Example 7]

A binder copolymer was prepared in the same manner as Example 1 except that 0.1 part by weight of diethanolamine, which was a second cross-linking agent, was not subjected to a post-addition reaction.

That is, an acrylamide-vinylpyrrolidone copolymer crosslinked only with a second cross-linking agent was used as a binder copolymer.

### [Comparative Example 8]

A copolymer was prepared according to Preparation Example 1 by using 50 parts by weight of acrylic acid and 50 parts by weight of acrylonitrile as a monomer mixture, and 0.3 parts by weight of N,N'-methylenebisacrylamide as a first cross-linking agent.

Afterward, a binder copolymer was prepared by post-adding 0.1 parts by weight of diethanolamine (DEA), which was a second cross-linking agent, and proceeding with a post-addition reaction.

The weight parts of the monomers, first cross-linking agent, and second cross-linking agent in Examples 1 to 6 and Comparative Examples 1 to 8 are shown in Table 1 below.

**[Table 1]**

| Used (co)polymer | VP (part by weight) | AM (part by weight) | AA (part by weight) | AN (part by weight) | A first cross-linking agent (MBA) (part by weight) | A second cross-linking agent (DEA) (part by weight) |
|---|---|---|---|---|---|---|
| Example 1 | 30 | 70 | 0 | 0 | 0.3 | 0.1 |
| Example 2 | 50 | 50 | 0 | 0 | 0.3 | 0.1 |
| Example 3 | 20 | 70 | 10 | 0 | 0.3 | 0.1 |
| Example 4 | 20 | 70 | 0 | 10 | 0.3 | 0.1 |
| Example 5 | 20 | 0 | 40 | 40 | 0.3 | 0.1 |
| Example 6 | 30 | 0 | 70 | 0 | 0.3 | 0.1 |
| Comparative Example 1 | 0 | 100 | 0 | 0 | 0 | 0 |
| Comparative Example 2 | 0 | 100 | 0 | 0 | 0 | 0.1 |
| Comparative Example 3 | 0 | 100 | 0 | 0 | 0.3 | 0 |
| Comparative Example 4 | 0 | 100 | 0 | 0 | 0.3 | 0.1 |
| Comparative Example 5 | 30 | 70 | 0 | 0 | 0 | 0 |
| Comparative Example 6 | 30 | 70 | 0 | 0 | 0 | 0.1 |
| Comparative Example 7 | 30 | 70 | 0 | 0 | 0.3 | 0 |
| Comparative Example 8 | 0 | 0 | 50 | 50 | 0.3 | 0.1 |

### [Preparation Example 2] Manufacturing of slurry for porous film coating

Inorganic particles (alumina, average particle diameter of 0.5µm) and binder (co)polymers prepared in Examples 1 to 6 and Comparative Examples 1 to 8 were mixed so that the solid weight ratio was 96:4, followed by the addition of distilled water until the solid concentration was 35% and mixing. This mixture was sufficiently dispersed using a ball mill method or a mechanical stirrer to prepare a slurry.

### [Preparation Example 3] Manufacturing of separator

The slurry for porous film coating prepared in Preparation Example 2 was deposited onto a polyolefin porous base (polyethylene (PE), polypropylene (PP)) to form an inorganic coating layer. Various coating methods can be used, such as dip coating, die coating, gravure coating, and comma coating.

In addition, after coating, the inorganic coating layer was dried using methods such as warm air, hot air, vacuum drying, and infrared drying, and the drying temperature was in a range of 50°C to 85°C.

The inorganic coating layer had a thickness in a range of 0.5 µm to 6 µm on one side or both sides. When the thickness of the inorganic coating layer was less than 0.5 µm, the heat resistance of the separator was significantly reduced. When the thickness of the inorganic coating layer exceeds 6 µm, the thickness of the separator was too thick, which might reduce the energy density of the battery and increase resistance.

### [Evaluation Example 1] Adhesion of slurry for porous film coating

A tape with a width of 18 mm and a length of 30 mm or more was attached to the separator prepared according to Preparation Example 3 using the binder (co)polymers of Examples 1 to 6 and Comparative Examples 1 to 8, followed by preparation of specimen by using a hand roller 5 times.

The prepared specimen was mounted on a UTM (1 kgf load cell), one part of the separator was fixed to the upper clip of the tensile strength machine, and the tape attached to the separator was fixed to the lower clip, followed by measurement of 180° peel strength at a speed of 100 mm/min. More than 5 specimens per sample were manufactured and measured, and the average value was calculated.

### [Evaluation Example 2] Heat shrinkage rate of separator (dry heat resistance)

The separator prepared according to Preparation Example 3 using the binder (co)polymers of Examples 1 to 6 and Comparative Examples 1 to 8 was prepared as a sample with a lateral and perpendicular size of 5 cm x 5 cm.

### [Evaluation Example 3] Heat shrinkage rate (wet heat resistance) after wetting of separator with electrolyte

The separator prepared according to Preparation Example 3 using the binder (co)polymers of Examples 1 to 6 and Comparative Examples 1 to 8 was prepared as a sample with a lateral and perpendicular size of 5 cm x 5 cm, followed by the sample being placed in a pouch with a solution of electrolyte in, sealed, and wetted for about 12 hours. Afterward, a gas outlet was created in the pouch and left in an oven at a temperature of 150°C for 1 hour, and then the sample was taken out and the shrinkage rate was measured.

The evaluation results of Evaluation Examples 1 to 3 are shown in Table 2 below.

**[Table 2]**

| Used (co)polymer | Physical properties | | |
|---|---|---|---|
| | Adhesion [gf/mm] | Heat shrinkage rate (dry heat resistance) (MD/TD) [%] | Heat shrinkage rate after wetting with electrolyte (wet heat resistance) (MD/TD) [%] |
| Example 1 | 1.2 | 5/6 | 5/6 |
| Example 2 | 1 | 6/6 | 4/3 |
| Example 3 | 1 | 6/6 | 5/7 |
| Example 4 | 1 | 6/6 | 5.5/7 |
| Example 5 | 1.2 | 6/7 | *7*/*7* |
| Example 6 | 1.3 | 5/7 | *7*/*7* |
| Comparative Example 1 | 1.3 | 8/8 | 28/36 |
| Comparative Example 2 | 1 | 7/8 | 27/32 |
| Comparative Example 3 | 1.1 | 7/8 | 26/31 |
| Comparative Example 4 | 1.3 | 7/7 | 24/22 |
| Comparative Example 5 | 1.1 | 7/7 | - |
| Comparative Example 6 | 1.2 | 6/6 | - |
| Comparative Example 7 | 1.1 | 6/6 | 10/11 |
| Comparative Example 8 | 1.2 | 7/8 | 49/57 |

As shown in Table 2, it was confirmed that the separators manufactured using the binder copolymers of Examples 1 to 6 had a lower heat shrinkage rate (particularly, the heat shrinkage rate in a state of being wetted with an electrolyte) than the separators manufactured using the binder (co)polymers of Comparative Examples 1 to 8, showing excellent heat resistance.

Looking specifically, the separators manufactured using the binder copolymers of Examples 1 to 6 had a lower heat shrinkage rate (particularly, heat shrinkage rate in a state of being wetted with an electrolyte) than the separators manufactured using the binder polymers of Comparative Examples 1 to 4 using an acrylamide homopolymer.

Particularly, in comparison with the separator using the binder polymer of Comparative Example 4 crosslinked using first and second cross-linking agents in the same manner as the binder copolymers of Examples 1 to 6, when vinylpyrrolidone was used as a monomer, the adhesive strength might be slightly reduced, but the heat shrinkage rate of the separators (particularly, the heat shrinkage rate in a state of being wetted with an electrolyte) was significantly lowered, showing excellent heat resistance.

Meanwhile, in comparison of a separator manufactured using the binder copolymer of Example 1 with a separator manufactured using the binder copolymers of Comparative Examples 5 to 7, in the separator manufactured using the binder copolymer of Comparative Example 5, vinylpyrrolidone was dissolved in the electrolyte solution, so the heat shrinkage rate of the separator could not be measured after wetting with the electrolyte solution.

That is, in the case of the separator manufactured using the binder copolymer of Comparative Example 5 without using the first cross-linking agent and the second cross-linking agent, the heat resistance of the separator was greatly reduced after the separator had been wetted with the electrolyte solution.

Likewise, the heat resistance of the separator manufactured using the binder copolymer of Comparative Example 6 without using the first cross-linking agent was significantly reduced after the separator had been wetted with the electrolyte solution compared to the separator manufactured using the binder copolymer of Example 1.

In addition, the separator manufactured using the binder copolymer of Comparative Example 7 without using the second cross-linking agent had an increased heat shrinkage rate and decreased heat resistance compared to the separator manufactured using the binder copolymer of Example 1.

In particular, the heat resistance of the separator manufactured using the binder copolymer of Comparative Example 7 was improved after the separator had been wetted with the electrolyte solution compared to the separators manufactured using the binder copolymers of Comparative Examples 5 and 6. However, the separator manufactured using the binder copolymer of Comparative Example 7 still had lower heat resistance after the separator had been wetted with the electrolyte solution than the separator manufactured using the binder copolymer of Example 1.

In other words, the first cross-linking agent contributed to the improvement of heat resistance after the separator had been wetted with the electrolyte solution, but the heat resistance decreased after the separator had been wetted with the electrolyte solution compared to the case where both the first cross-linking agent and the second cross-linking agent were used.

Meanwhile, the separator manufactured using the binder copolymer of Comparative Example 8 with the use of the first and second cross-linking agents in the same manner as in Examples 1 to 6 but only prepared through the polymerization of acrylamide monomer and acrylonitrile monomer, exhibited a low heat resistance of the separator. Especially after the separator had been wetted with the electrolyte solution, the separator exhibited a significantly low heat resistance, compared to the separators manufactured using the binder copolymers of Examples 1 to 6 through 6.

As a result, the separators manufactured using the binder copolymers of Examples with the use of the first and second cross-linking agents had excellent base adhesion and excellent heat resistance at a temperature of 150°C. In particular, the separators maintained excellent heat resistance properties at a temperature of 150°C even after having been wetted with the electrolyte solution.

The scope of the present disclosure is indicated by the claims described later rather than the detailed description above. The meaning and scope of the patent claims, and all changes or modified forms derived from the equivalent concept thereof, should be construed as being included in the scope of the present disclosure.

### Industrial Applicability

The copolymer composition of the present disclosure can improve the adhesion and heat resistance of the slurry composition, increase the adhesion with the polyolefin film, which is a base of a separator, and improve the heat resistance of the separator (particularly, the heat resistance in a state of being wetted with an electrolyte).

With the use of the separator, a battery with excellent lifespan characteristics and stability can be implemented.

## Claims

1. A copolymer composition comprising:
a copolymer comprising 30% or more to 80% or less by weight of at least one type of monomer unit selected from the group consisting of acrylate-based monomer units, acrylonitrile-based monomer units, vinylamide-based monomer units, and acrylamide-based monomer units and 20% or more to 70% or less by weight of vinylpyrrolidone monomer units, based on 100% of the total weight of the copolymer; and
a cross-linking agent.

2. The copolymer composition of claim 1, wherein the acrylate-based monomer units are formed by polymerizing acrylic acid, methacrylic acid, hydroxylethyl acrylate, hydroxylethyl methacrylate, glycidyl acrylate, and glycidyl methacrylate, or a combination thereof,
the acrylonitrile-based monomer units are formed by polymerizing acrylonitriles, methacrylonitriles, or a combination thereof,
the vinyl amide-based monomer units are formed by polymerizing vinyl acetamide, methyl vinyl acetamide, vinylformamide, or a combination thereof,
the acrylamide-based monomer units are formed by polymerizing acrylamide, methacrylamide, N-methylmethacrylamide, hydroxyethyl acrylamide, hydroxyethyl methacrylamide, dimethylacrylamide, or a combination thereof, and
the vinylpyrrolidone monomer units are formed by polymerizing vinylpyrrolidone.

3. The copolymer composition of claim 1, wherein the copolymer comprises a monomer repeating structure represented by Formula 1, 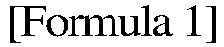 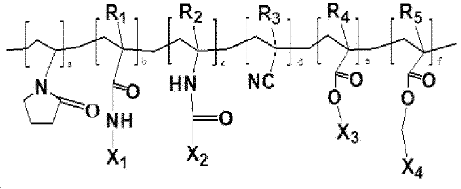 wherein in Formula 1,
R₁ to R₅ are each independently hydrogen or a linear or branched hydrocarbon having 1 to 4 carbon atoms,
X₁ and X₂ are each independently hydrogen or a linear or branched hydrocarbon having 1 to 20 carbon atoms,
X₃ is hydrogen, a linear or branched hydrocarbon having 1 to 20 carbon atoms, or an acid,
X₄ is a linear or branched hydrocarbon having 1 to 20 carbon atoms, or alcohol,
a, b, c, d, e, and f are in a relationship of a+b+c+d+e+f=1,
a is in a range of 0.2 to 0.7, and b+c+d+e+f has a value in a range of 0.3 to 0.8, and
b, c, d, e, and f are each independently in a range of 0 to 0.8,
(however, at least one of b, c, d, e, and f is not 0).

4. The copolymer composition of claim 1, wherein the cross-linking agent comprises at least one selected from the group consisting of a first cross-linking agent and a second cross-linking agent,
the first cross-linking agent contains a double bond, and
the second cross-linking agent is a compound represented by Formula 2, 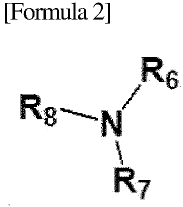 wherein in Formula 2,
R₆ to R₈ are each independently hydrogen, a linear or branched hydrocarbon having 1 to 6 carbon atoms, an alcohol having 1 to 6 carbon atoms, an acid having 1 to 6 carbon atoms, or a combination thereof.

5. The copolymer composition of claim 4, wherein the first cross-linking agent contains poly(ethylene glycol)diacrylate, N,N'-methylenebisacrylamide, divinyl adipate, 1,4-butanediol divinyl ether, 1,4-cyclohexanedimethanol divinyl ether, 1,6-divinylperfluorohexane, or 1H,1H,6H,6H-perfluoro-1,6-hexanediol diacrylate, or a combination thereof.

6. The copolymer composition of claim 4, wherein the first cross-linking agent is comprised in an amount of 0.05 or more to 5 or less parts by weight, and the second cross-linking agent is comprised in an amount of 0.05 or more to 5 or less parts by weight, based on 100 parts by weight of the copolymer.

7. A slurry composition comprising:
the copolymer composition of any one of claims 1 to 6; and
inorganic particles.

8. A separator comprising the slurry composition of claim 7.

9. A secondary battery comprising the separator of claim 8.
